Europäisches Patentamt

European Patent Office

Office européen des brevets

(11) Publication number: **0 178 047**
A1

# (12) EUROPEAN PATENT APPLICATION

(21) Application number: 85305678.6

(22) Date of filing: 09.08.85

(51) Int. Cl.⁴: **H 04 N 1/46**

(30) Priority: 03.09.84 GB 8422208

(43) Date of publication of application: 16.04.86
Bulletin 86/16

(84) Designated Contracting States: DE GB

(71) Applicant: **CROSFIELD ELECTRONICS LIMITED, De La Rue House 3/5 Burlington Gardens, London W1A 1DL (GB)**

(72) Inventor: **Jordan, Brian, 9 Lombardy Close, Hemel Hempstead Herts (GB)**

(74) Representative: **Skone James, Robert Edmund et al, GILL JENNINGS & EVERY 53-64 Chancery Lane, London WC2A 1HN (GB)**

(54) Colour printing data generation.

(57) A method and apparatus for generating colour printing data is described. The apparatus comprises a scanner (5, 12) for scanning an image (2) at more than one resolution and for storing a first set of output signals. First and second stores (9, 13) store first and second three dimensional modifying means defined by respective predetermined parameters, the stores (9, 13) being arranged to receive output signals from the scanner (5) and wherein, in use, the first set of output signals is modified by the first modifying means to generate a first set of n input signals, one for each of the printing colours. A monitor (15) is arranged to receive the n input signals, if necessary after conversion to a suitable format of m input signals, from the first modifying means to display the scanned image; and user-operable control means (16) is provided for adjusting the parameters stored in the first store (13), the arrangement of the first and second modifying means being such that in use at least when the parameters defined by the first modifying means have been finally set, corresponding parameters are set in the second modifying means.

CROSFIELD ELECTRONICS LIMITED                52/2223/02

<u>COLOUR PRINTING DATA GENERATION</u>

The invention relates to methods and apparatus for generating colour printing data.

In conventional scanning systems such as the Crosfield Magnascan 630 an image is scanned to generate signals representing the densities of different colours (usually three) in each of a plurality of pixels into which the image is divided. As part of the scanning process, a black printer signal is also generated and this is achieved by feeding the original raw signals to a colour correction unit containing a 3D look-up table (LUT) whose parameters have previously been set so that the generation of a black signal is accompanied by modification of the other signals. The four signals produced are generally then stored on disc and then the image is retouched in a retouching system such as our Studio 800 Proedit System.

One of the problems with this arrangement is that if a change is required in the 3D LUT then the original image must be rescanned. This is a particular problem where it is desired to scan the original image at high resolution (ie. 90000 pixels per square inch) since a typical scan of an A4 page can take four to five minutes.

GB-A-1,540,525 illustrates a scanning system in which initially an original image is mounted for a camera which scans the image to generate three colour signals R, G, B. These are fed to a computer which converts the colour signals to printing colour signals and these printing colour signals are then fed to a colour converter which converts them back to monitor colour signals R, G, B which are applied to a colour monitor to enable the image to be viewed. The algorithms used by the computer 24 to convert the colour signals from the camera to printing colour signals are modified by the operator and the result of the modifications are viewed on the monitor. Once a satisfactory reproduction has been achieved, the original is transferred onto a cylinder and is then rescanned using a scanning head to generate the three colour signals R, G, B. These are again fed to the computer 24 but in this case the four printing colour signals are fed directly to an expose head which controls an exposing beam impinging on a record medium mounted on another cylinder.

There are various problems associated with this known system. Firstly, the original has to be first mounted for the camera and then transferred to the cylinder and remounted. This is time consuming and also means that accurate positional data cannot be obtained from the preview. Secondly, the original is previewed using a camera and light source different from the scanner and potentially having a chromatic mismatch with the scanner. There is a significant likelihood of inaccuracies in the set-up.

In accordance with one aspect of the present invention, a method of generating colour printing data comprises

(i)      scanning an image at a first resolution and storing a first set of output signals;

(ii)    modifying the first set of output signals in accordance with parameters defining a three dimensional look-up table to generate a first set of n input signals, one for each of the printing colours;

(iii)   applying the n input signals, where necessary after conversion to a suitable format of m input signals, to a monitor to display the scanned image;

(iv)   viewing the displayed image and, if necessary, altering the parameters defining the three dimensional LUT and repeating steps (ii) to (iv) until the displayed image is satisfactory;

(v)     at least where the first resolution is different from a desired second resolution, rescanning the image at the second resolution, and generating a second set of output signals; and,

(vi)    applying the latest set of parameters defining the three dimensional LUT to the first or second set of output signals respectively to generate a second set of n input signals, one for each of the printing colours.

With this invention, the parameters defining the conventional look-up table can be modified by an operator and a fresh set of input signals produced without the necessity of rescanning the image after each modification. Furthermore, the invention can lead to a significant increase in the speed with which the second set of output signals can be produced since the first resolution may be relatively coarse compared with the second, desired resolution leading to a faster scanning time. This will commonly be the case where the number of pixels defining the original image is larger than the total number which can be displayed on a monitor screen. In other cases, however, the first resolution could be the same as or finer than the second resolution.

It should be noted that in the invention, the original image is mounted once only and is previewed while mounted in its final position. This allows measurements and decisions to be made relating to positional data, for example cropping, and other local area correction. Furthermore, the original is previewed

0178047

-4-

using the same electro-optical system as the final scan, eliminating any differences between the two stages.

The second set of n input signals can either be fed directly to an output device for generating colour separations or they may be stored, for example on a disc store, which is then transferred to a retouching system such as our Studio 800 Proedit system, or they could be fed directly to a retouching system. In the retouching system the colour component signals will be modified using one dimensional LUT's in accordance with operator instructions.

Where the first and second resolutions are the same, then it is not essential to rescan the original. However, in some examples, it is convenient to rescan even in this situation.

In accordance with a second aspect of the present invention, colour printing data generating apparatus comprises a scanner for scanning an image at more than one resolution and for storing a first set of output signals; first and second stores for storing first and second three dimensional modifying means defined by respective predetermined parameters, the stores being arranged to receive output signals from the scanner and wherein, in use, the first set of output signals is modified by the first modifying means to generate a first set of n input signals, one for each of the printing colours; a monitor arranged to receive the n input signals, if necessary after conversion to a suitable format of m input signals, from the first modifying means to display the scanned image; and user-operable control means for adjusting the parameters stored in the first store, the arrangement of the first and second modifying means being such that in use at least when the parameters defined by the first modifying means have been finally set, corresponding parameters are set in the second modifying means.

The parameters may be finally set for the second modifying means either automatically by continually updating the second modifying means in accordance with the parameters set for the first modifying means, under the control of auxilliary transfer means which is actuated once the operator indicates that the parameters have been finally set for the first modifying means, or, preferably, the first modifying means itself forms the second modifying means, the control means determining whether the ouput signals from the first modifying means should be applied to the monitor or constitute resultant output signals for feeding to a store, colour separation generating means, or a retouching system.

An example of colour printing data generating apparatus and a method of generating colour printing data in accordance with the present invention will now be described with reference to the accompanying drawings, in which:-

Figure 1 is a block diagram of the apparatus; and,

Figure 2 is a flow diagram illustrating the method of operation of the apparatus.

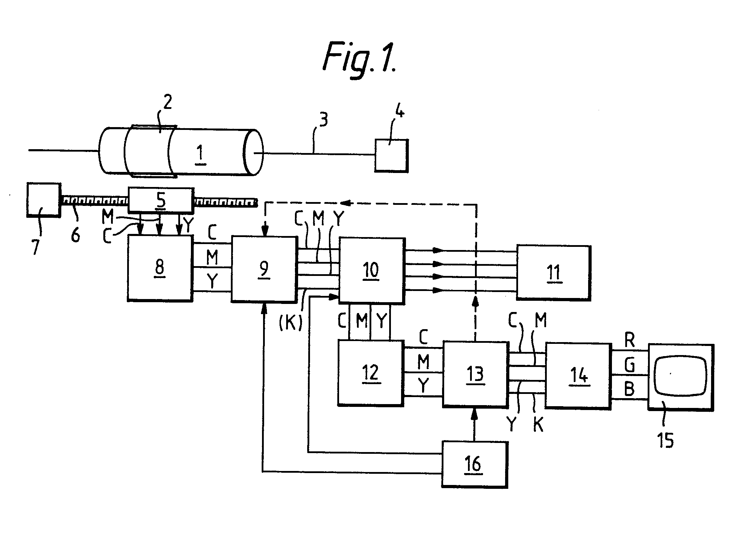

Figure 1 illustrates schematically a scanning cylinder 1 which carries an original image 2 to be scanned. The cylinder 1 is mounted on an axle 3 which is rotated by a motor 4 causing the cylinder 1 to rotate. Adjacent the cylinder 1 is mounted a scanning head 5 on a lead screw 6. The lead screw 6 is rotated by a motor 7 to cause the scanning head 5 to move parallel with the cylinder 1. The rate of movement of the scanning head 5 along the lead screw 6 is small compared with the rate of rotation of the cylinder 1.

The cylinder 1 is transparent and a light source (not shown) is mounted within the cylinder 1. Light from the

0178047

light source passes through the cylinder 1 and the original image 2 and impinges on detectors mounted in the scanning head 5. Rotation of the cylinder 1 and movement of the scanning head 5 along the lead screw 6 causing the original image to be scanned and a set of three output signals are generated representing the densities of cyan (C), magenta (M), and yellow (Y) for each pixel into which the original image is notionally divided.

The output signals from the scanning head 5 are fed to preliminary modifying electronics 8 which modifies the signals to compensate for any defects in the scanning head 5. The signals from the modifying electronics 8 are then fed to a colour correction unit 9.

The apparatus thus far described is of conventional form and may for example be found in our Crosfield Magnascan 630 Scanner.

Colour signals from the colour correction unit 9 are fed to a switch 10 which, depending upon its state of operation, either passes the signals through to a store 11 or to a store 12.

Signals stored in the store 12 may be passed to another colour correction unit 13 similar to the colour correction unit 9 with signals output from the unit 13 being passed to a colour converter 14 to generate monitor format signals which are fed to a monitor 15.

The apparatus is controlled by an operator control unit 16.

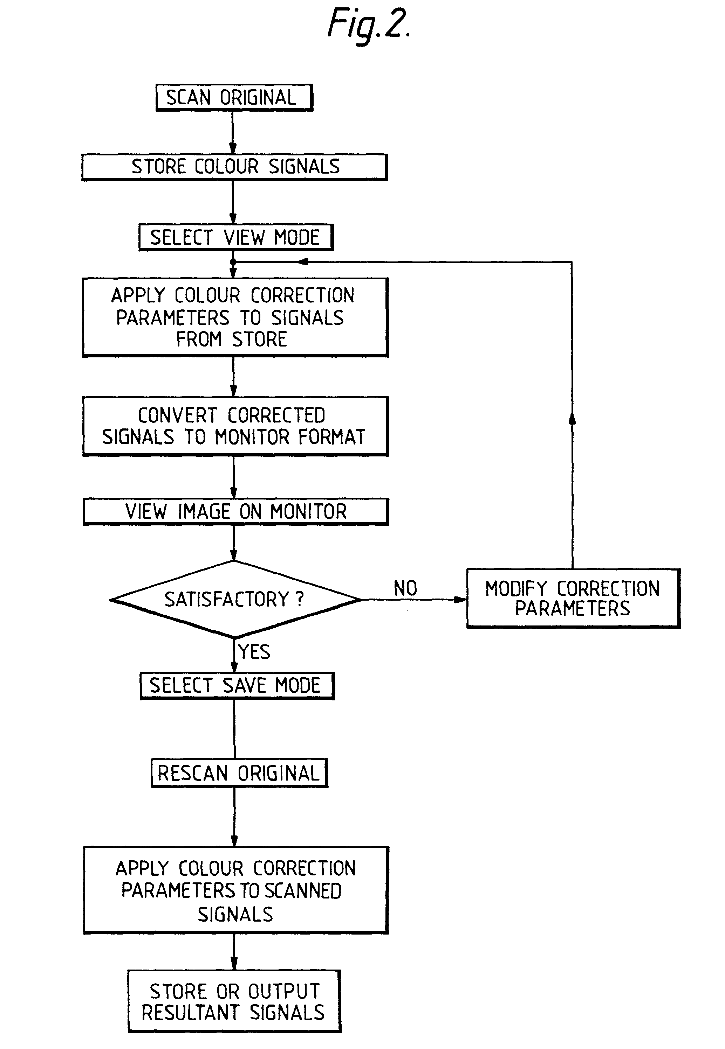

The operation of the apparatus is illustrated by the flow diagram shown in Figure 2. Initially, the original image 2 is scanned at a first resolution to generate three output signals C, M, and Y which are fed via the preliminary modifying electronics 8 to the colour correction unit 9. At this stage, the operator control unit 16 is used to select a "view" mode in which the colour correction unit 9 is deactivated so that the three colour signals pass through the unit 9 without modification to the switch 10. In this mode the switch 10 is activated by the operator control unit 16 to pass the three colour signals to the store 12 where they are stored for each pixel.

The operator then enters a "view" command and this causes the signals stored in the store 12 to be fed to the colour correction unit 13. The colour correction unit 13 (and the identical colour correction unit 9) contains parameters defining a 3D look-up table and processes the incoming three input signals to generate a fourth signal representing black (K) and to modify the other three signals accordingly. An example of the colour correction unit 13 is the interpolator described in our earlier British patent Specification GB-A-2,053,619 which is incorporated herein by reference.

The four signal (or n signal) output from the colour correction unit 13 constitute printing colour format signals. These are not suitable for controlling a conventional monitor and so the four signals from the colour correction unit 13 are fed to a conventional colour converter 14. The colour converter 14 comprises a set of look-up tables addressed by the four printing colour format signals to generate three monitor format signals red (R), green (G), and blue (B) which are fed to the monitor 15.

The operator then views the image displayed on the control unit 16 and adjusts one or more of the parameters stored in the colour correction unit 13 to modify the image.

When the operator has made a number of adjustments to the parameters, he enters another "view" command in order to view an accurate simulation of the effects of the accumulated modifications. The result of the "view" command is that the raw data stored in the store 12 is again fed through the colour correction unit 13 where it is modified in accordance with the latest parameters and is then displayed on the monitor 15. This may continue as long as desired in an interactive form in that the operator decides on the next modifications by observing the results on the monitor 15 of the previous modifications.

When the operator is satisfied with the accumulated modifications stored in the 3D look-up table of the colour correction unit 13, he issues a "save" command and the apparatus enters the "save" mode. In this mode, the parameters stored in the look-up tables of the colour correction unit 13 are transferred to the identical colour correction unit 9. The switch 10 is altered so that picture data leaving the colour correction unit 9 will be fed instead to the store 11. The original image 2 is then rescanned by the scanning head 5. This may either be at the same resolution as the first scan or at a different, usually higher, resolution. The advantage of this is that during the "view" mode, it is not essential for the image to be viewed on the monitor at the final resolution. If in the "view" mode a relatively low resolution is used this speeds up the processing time during the interactive process.

In the "save" mode, the colour correction unit 9 is active and applies the latest set of parameters to the incoming printing colour signals from the preliminary modifying electronics 8.

The signals stored in the store 11 may be subsequently retouched in a conventional retouching system such as our Studio 800 Proedit series or in another example (not shown) the signals from the switch 10 could be fed directly to colour separation generating means.

Although the colour correction units 9, 13 are shown separately in Figure 1 this is intended only for the purposes of clarity and in practice the same unit may be used in both stages with the control unit 16 controlling whether or not the output is fed to the monitor 15. In this case, it is not necessary to provide an extra 3D look-up table since the one table can simply retain the latest parameters when the "save" command is issued.

It should also be noted that although the colour correction units 9, 13 have been shown in terms of hardware components they are in practice likely to comprise a suitably programmed microcomputer in combination with a RAM.

In the examples illustrated in Figure 1, the store 12 is connected to the switch 10 downstream of the colour correction unit 9. In other examples (not shown) the store 12 may be positioned upstream of the colour correction unit 9 so that if the final desired resolution is the same as the resolution used for the initial scan, no second scan is required once the final set of parameters has been determined.

Although the apparatus has been described principally in connection with the generation of half-tone dot images, the invention is equally applicable to continuous tone image production.

0178047

## CLAIMS

1. A method of generating colour printing data, the method comprising

(i) scanning an image at a first resolution and storing a first set of output signals;

(ii) modifying the first set of output signals in accordance with parameters defining a three dimensional look-up table to generate a first set of n input signals, one for each of the printing colours;

(iii) applying the n input signals, where necessary after conversion to a suitable format of m input signals, to a monitor to display the scanned image;

(iv) viewing the displayed image and, if necessary, altering the parameters defining the three dimensional LUT and repeating steps (ii) to (iv) until the displayed image is satisfactory;

(v) at least where the first resolution is different from a desired second resolution, rescanning the image at the second resolution, and generating a second set of output signals; and,

(vi) applying the latest set of parameters defining the three dimensional LUT to the first or second set of output signals respectively to generate a second set of n input signals, one for each of the printing colours.

2. A method according to claim 1, wherein the first resolution is relatively coarse compared with the second resolution.

3. Colour printing data generating apparatus comprising a scanner (5,12) for scanning an image (2) at more than one resolution and for storing a first set of output signals; first and second stores (13,9) for storing first and second three dimensional modifying means defined by respective predetermined parameters, the stores being arranged to receive output signals from the scanner (5,12) and wherein, in use, the first set of output signals is modified by the first modifying means to generate a first set of n input signals, one for each of the printing colours; a monitor (15) arranged to receive the n input signals, if necessary after conversion to a suitable format of m input signals, from the first modifying means to display the scanned image; and user-operable control means (16) for adjusting the parameters stored in the first store (13), the arrangement of the first and second modifying means being such that in use at least when the parameters defined by the first modifying means have been finally set, corresponding parameters are set in the second modifying means.

4. Apparatus according to claim 3, wherein the first modifying means forms the second modifying means, the control means (16) being arranged to determine whether the output signals from the first modifying means should be applied to the monitor (15) or constitute resultant output signals for feeding to a store (11), colour separation generating means, or a retouching system.

Fig.1.

0178047

# Fig.2.

```
          ┌──────────────────┐
          │  SCAN ORIGINAL   │
          └──────────────────┘
                   │
                   ▼
     ┌──────────────────────────┐
     │   STORE COLOUR SIGNALS    │
     └──────────────────────────┘
                   │
                   ▼
        ┌────────────────────┐
        │  SELECT VIEW MODE  │
        └────────────────────┘
                   │
                   ▼
  ┌────────────────────────────┐
  │  APPLY COLOUR CORRECTION    │
  │  PARAMETERS TO SIGNALS      │
  │  FROM STORE                 │
  └────────────────────────────┘
                   │
                   ▼
  ┌────────────────────────────┐
  │   CONVERT CORRECTED         │
  │  SIGNALS TO MONITOR FORMAT  │
  └────────────────────────────┘
                   │
                   ▼
  ┌────────────────────────────┐
  │   VIEW IMAGE ON MONITOR     │
  └────────────────────────────┘
                   │
                   ▼
              ◇ SATISFACTORY ? ◇ ──NO──▶ ┌──────────────────┐
                   │                      │ MODIFY CORRECTION │
                  YES                     │   PARAMETERS      │
                   │                      └──────────────────┘
                   ▼
        ┌────────────────────┐
        │  SELECT SAVE MODE  │
        └────────────────────┘
                   │
                   ▼
        ┌────────────────────┐
        │  RESCAN ORIGINAL   │
        └────────────────────┘
                   │
                   ▼
  ┌────────────────────────────┐
  │  APPLY COLOUR CORRECTION    │
  │  PARAMETERS TO SCANNED      │
  │  SIGNALS                    │
  └────────────────────────────┘
                   │
                   ▼
  ┌────────────────────────────┐
  │   STORE OR OUTPUT           │
  │   RESULTANT SIGNALS         │
  └────────────────────────────┘
```

## European Patent Office

## EUROPEAN SEARCH REPORT

Application number

EP 85 30 5678

### DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,X | GB-A-1 540 525 (HELL) <br> * Page 2, line 63 - page 3, line 128 * | 1-4 | H 04 N 1/46 |
| A | US-A-4 037 249 (PUGSLEY) <br> * Column 1, lines 10-24; column 3, line 55 - column 4, line 29; column 4, line 54 - column 5, line 43 * | 1-4 | |

---

**TECHNICAL FIELDS SEARCHED (Int. Cl.4)**

H 04 N 1/00

The present search report has been drawn up for all claims

| Place of search | Date of completion of the search | Examiner |
|---|---|---|
| THE HAGUE | 09-12-1985 | DE ROECK A.F.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82